(19) Europäisches Patentamt
European Patent Office
Office européen des brevets

(11) Publication number: **0 207 670 B1**

(12) **EUROPEAN PATENT SPECIFICATION**

(45) Date of publication of patent specification: **26.08.92**

(51) Int. Cl.⁵: **G11B 7/24**

(21) Application number: **86304548.0**

(22) Date of filing: **13.06.86**

The file contains technical information submitted after the application was filed and not included in this specification

(54) **Optical disc.**

(30) Priority: **14.06.85 JP 130142/85**
**14.06.85 JP 130143/85**

(43) Date of publication of application:
**07.01.87 Bulletin 87/02**

(45) Publication of the grant of the patent:
**26.08.92 Bulletin 92/35**

(84) Designated Contracting States:
**DE FR GB**

(56) References cited:
**US-A- 4 407 995**
**US-A- 4 414 273**

**PATENT ABSTRACTS OF JAPAN, unexamined applications, section M, vol. 7, no. 237, October 21, 1983 THE PATENT OFFICE JAPANESE GOVERNMENT page 131 M 250**

**PATENT ABSTRACTS OF JAPAN, unexamined applications, section C, vol. 8, no. 15, January 21, 1984 THE PATENT OFFICE JAPANESE GOVERNMENT page 35 C 206**

**RESEARCH DISCLOSURE, no. 206, June 1981, hampshire ANONYMOUS "Physically optimized optical disc structure, method and apparatus" pages 243-249**

(73) Proprietor: **MATSUSHITA ELECTRIC INDUSTRIAL CO., LTD.**
**1006, Oaza Kadoma**
**Kadoma-shi, Osaka-fu, 571(JP)**

(72) Inventor: **Ito, Akio**
**3-9-401, Myokenzaka**
**Katano-shi Osaka-fu, 576(JP)**
Inventor: **Mochizuki, Hideaki**
**3-5-9-A816, Nishiiwata-cho**
**Higasiosaka-shi Osaka-fu, 578(JP)**
Inventor: **Sunohara, Masaaki**
**16-1-102, Syakusonju-cho**
**Hirakata-shi Osaka-fu, 573(JP)**
Inventor: **Tamura, Tooru**
**3-7-15, Asahigaoka**
**Ikeda-shi Osaka-fu, 563(JP)**

(74) Representative: **Spencer, Graham Easdale et al**
**Northumberland House 303-306 High Holborn**
**London WC1V 7LE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to an optical disc on which signals can be recorded and from which recorded signals can be read by means of reflection or transmission of laser light.

At present, optical discs are commercially available as digital audio discs (compact discs) and optical video discs. They are read-only discs on which unerasable information has been recorded. There is research under way, however, to produce write-once optical discs and erasable optical discs and these are expected to be promising storage media for images, documents and data.

An optical disc is made up of a substrate which has a recording film thereon, the substrate being made of glass or of a transparent resin. Resin substrates are required to have the following features:

(1) good moldability and good transferability of mold pattern.
(2) high light transmittance.
(3) small optical anisotropy (referred to as birefringence hereinafter).
(4) high mechanical strength.
(5) good durability to retain the initial physical properties for a long time under severe environmental conditions.
(6) good receptivity to the recording film.

In the case of a read-only optical disc, the recording film is aluminum deposited on the disc substrate. In the case of the write-once or erasable optical disc, there have been developed various types of recording films such as melt type, phase transition type, opto-magnetic type, and sublime type.

An optical disc substrate should be unreactive to the recording film. In other words, it should not contain a volatile or exudable substance which could react with the recording film to cause it to deteriorate.

To meet the above-mentioned requirements, optical disc substrates are usually made of an acrylic resin or a specific polycarbonate resin.

US-A-4407995 discloses the use of bis(hydroxyphenyl)alkane polycarbonate resins for making optical discs and also describes the incorporation in the resins of from 100 to 10,000 ppm of an organophosphite or organophosphonate to provide heat stabilisation.

Japanese Patent Applications Laid-open Nos. 58-126119 and 58-180553 describe specific polycarbonate resins useful for optical disc substrates, which resins have a small average molecular weight and contain at least 0.005 wt % of antioxidant. The average molecular weight of the polycarbonate resin is relatively small thereby reducing birefringence. According to these prior art references, the polycarbonate resin is mixed with a phosphorus-based antioxidant to prevent thermal degradation (thermal decomposition) which would otherwise occur at the time of molding. However, amounts of at least 0.005 wt %, and more usually 0.01 to 0.1 wt %, of the added antioxidant adversely affects the recording film in a high-temperature, high-humidity environment.

We have now found that the use of a smaller quantity of certain phosphite esters in polycarbonate resins for optical discs gives the disc an improved stability over time.

According to the invention, there is provided an optical disc which comprises an optical disc substrate of a bis(hydroxyphenyl)alkane polycarbonate resin of low average molecular weight, and a recording film formed on the substrate, the polycarbonate resin containing phosphite ester having the formula:

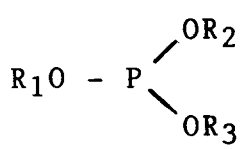

where $R_1$ and $R_2$ are alkyl groups or aryl groups, and $R_3$ is a hydrogen atom, or an alkyl or aryl group; characterised in that the phosphite ester is present in an amount up to 0.0025 wt % and the average molecular weight of the resin is from 13000 to 22000.

In the discs of the invention, the recording film is protected from corrosion and deterioration, and the disc has a reduced birefringence and an improved CN (carrier/noise) ratio.

The bis(hydroxyphenyl)alkanes used in this invention include, for example, 2,2-bis(4-hydroxyphenyl)-propane (referred to as bisphenol A hereinafter), 2,2-bis(4-hydroxyphenyl)butane, 2,2-bis(4-hydroxyphenyl)-pentane, 2,2-bis(4-hydroxyphenyl)octane, and 1,1-bis(4-hydroxyphenyl)-ethane. The polycarbonate resin should have an average molecular weight of 13000 to 22000 calculated by the ordinary viscosity measurement method. With an average molecular weight higher than 22,000, the polycarbonate resin has a

high melt viscosity and a poor fluidity in injection molding, so that the substrate obtained has high birefringence. On the other hand, a polycarbonate resin having an average molecular weight lower than 13,000 is too poor in mechanical properties to be made into an optical disc substrate.

The phosphite ester used in this invention is a compound represented by the above formula wherein $R_1$ and $R_2$ are alkyl groups such as butyl, hexyl, decyl and cyclohexyl, or aryl groups such as phenyl and nonylphenyl; and $R_3$ is a hydrogen atom or one of the above-mentioned alkyl or aryl groups. Examples include triphenyl phosphite, tris(nonylphenyl) phosphite, tris(2,4-di-t-butylphenyl)phosphite, 2-ethylhexyldiphenyl phosphite and didecyl-monophenyl phosphite.

The phosphite ester is added to the resin in an amount of at most 0.0025 wt % with respect to the weight of the polycarbonate resin. An excessive amount of phosphite ester deteriorates the recording film. If no phosphite ester antioxidant is added, the polycarbonate resin is unstable when it is heated and melted during molding (except sometimes when the polycarbonate resin has a high purity). In the case of polycarbonate resins of ordinary purity, uncorrectable defects occur in large numbers if no phosphite ester is included. (The error rate of an optical disc is measured in terms of electrical signals using a testing player.) The purity of polycarbonate resins is determined by measuring the conductivity of an extract of the resin.

Usually, the above-mentioned phosphite esters may be used either individually or in combination with one another. They may also be used in combination with a phosphate ester so long as it does not adversely affect the performances of the optical disc.

In order that the invention may be more fully understood, the following Examples are given by way of illustration only.

Examples 1 to 9

Optical disc substrates each having spiral pregrooves on one side, 1.2 mm in thickness and 120 mm in diameter, were produced by injection molding various bisphenol A-based polycarbonate resins (in pellet form) of ordinary purity, having differing molecular weights and containing different kinds of phosphite esters as specified below. The discs were examined for birefringence. Molecular weight of polycarbonate resins: 15,000, 17,000, and 20,000. Phosphite esters: Tris(nonylphenyl) phosphite, tris(2,4-di-t-butyl-phenyl) phosphite, and 2-ethylhexyldiphenyl phosphite. Amount of phosphite ester added: 0.0005, 0.001, and 0.0025 wt %.

Each substrate was coated with a recording film (300 to 500 Å ($3 \times 10^{-8}$m to $5 \times 10^{-8}$m) thick) of tellurium suboxide by vacuum deposition. The optical disc obtained was examined using a testing player unit to see how many defects, longer than 30 µm in the circumferential direction, were present on the disc surface. In addition, the optical disc was examined for CN ratio after standing in an atmosphere at 80°C and 80 %RH for a prescribed period of time. The results are shown in Table 1.

For comparison, the same procedure as mentioned above was repeated except that the polycarbonate resin was replaced by one having an average molecular weight of 25,000, and in which the amount of phosphite ester was either nil or 0.01 wt%. The results are also shown in Table 1.

The birefringence was measured using a polarization microscope (made by Nippon Kogaku K.K.) equipped with a Senarmont compensator. The measurements were carried out along a circle 110 mm in diameter on the optical disc substrate.

Table 1

| Example No. | Average molecular weight | Phosphite ester: Name | Phosphite ester: wt% * | Birefringence (nm) | Number of defects | CN ratio ** (dB) |
|---|---|---|---|---|---|---|
| 1 | 15000 | Tris(nonylphenyl) phosphite | 0.0005 | 10 | 100 | -0.2 |
| 2 | 15000 | Tris(nonylphenyl) phosphite | 0.001 | 11 | 50 | -0.5 |
| 3 | 15000 | Tris(nonylphenyl) phosphite | 0.0025 | 10 | 30 | -0.7 |
| 4 | 15000 | Tris(2,4-di-t-butylphenyl) phosphite | 0.0005 | 12 | 80 | -0.1 |
| 5 | 15000 | Tris(2,4-di-t-butylphenyl) phosphite | 0.001 | 10 | 40 | -0.8 |
| 6 | 15000 | Tris(2,4-di-t-butylphenyl) phosphite | 0.0025 | 11 | 30 | -0.9 |
| 7 | 17000 | 2-Ethylhexyldiphenyl phosphite | 0.001 | 15 | 60 | -0.4 |
| 8 | 17000 | 2-Ethylhexyldiphenyl phosphite | 0.0025 | 18 | 40 | -0.8 |
| 9 | 20000 | 2-Ethylhexyldiphenyl phosphite | 0.001 | 30 | 80 | -0.5 |
| Comparative Example 1 | 15000 | - | 0 | 12 | 5000 | -0.2 |
| Comparative Example 2 | 15000 | Tris(nonylphenyl) phosphite | 0.01 | 13 | 30 | -3.0 |
| Comparative Example 3 | 25000 | Tris(nonylphenyl) phosphite | 0.0025 | 200 | 50 | -0.8 |

** (CN ratio after standing for 2000 hours) - (initial CN ratio)

* with respect to the weight of polycarbonate resin.

## Example 10

An optical disc substrate having spiral pregrooves on one side, 1.2 mm in thickness and 120 mm in diameter, was produced by injection molding bisphenol A-based polycarbonate resin (in pellet form) of ordinary purity, having a molecular weight of 15,000 and containing 0.002 wt% of tris(nonylphenyl) phosphite.

The substrate was coated with a GdTbFe-based recording film by sputtering. The optical disc was then examined using a testing player to see how many defects, longer than 30 μm in the circumferential direction, were present on the disc surface. In addition, the optical disc was examined for CN ratio after standing in an atmosphere at 80°C and 80 %RH for 2000 hours. The results were as follows. Twenty large defects were found, and the initial CN ratio decreased by 0.9 dB upon standing.

For comparison, the same procedure as described above was repeated except that the amount of phosphite ester was changed to 0.01 wt%. The results were as follows. Five large defects were found, and the CN ratio decreased by 4 dB upon standing.

Example 11

Optical disc substrates having spiral pregrooves on one side, 1.2 mm in thickness and 120 mm in diameter, were produced by injection molding from bisphenol A-based polycarbonate resins (in pellet form) of varied purity having a molecular weight of 15,000.

The substrate was coated with a tellurium suboxide recording film (300 to 500 Å ($3 \times 10^{-8}$m to $5 \times 10^{-8}$m) thick) by vacuum deposition. The optical discs were examined using a testing player to see how many defects, longer than 30 μm in the circumferential direction, were present on the disc surface. In addition, the optical discs were examined for CN ratio after standing in an atmosphere at 80°C and 80 %RH for 2000 hours. The results are shown in Table 2.

The purity of the polycarbonate resin was measured as follows. The pellets were crushed and the resulting powder (1 g) was extracted with 50 ml of boiling pure water. The conductivity of the extract was measured using a conductivity meter. In the case of polycarbonate resin of low purity, the conductivity was high.

Table 2

| Example No. | Conductivity (μS/cm) | Number of defects | CN ratio * (dB) |
|---|---|---|---|
| 11 | 1.0 | 50 | -0.2 |
| Comparative Example 4 | 1.5 | 400 | -0.4 |
| Comparative Example 5 | 3.5 | 5000 | -0.3 |

* (CN ratio after standing for 2000 hours) - (initial CN ratio)

**Claims**

**1.** An optical disc which comprises an optical disc substrate of a bis(hydroxyphenyl)alkane polycarbonate resin of low average molecular weight, and a recording film formed on the substrate, the polycarbonate resin containing phosphite ester having the formula:

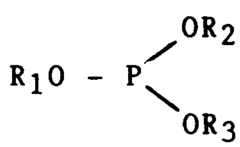

where $R_1$ and $R_2$ are alkyl groups or aryl groups, and $R_3$ is a hydrogen atom, or an alkyl or aryl group; characterised in that the phosphite ester is present in an amount up to 0.0025 wt % and the average molecular weight of the resin is from 13000 to 22000.

**2.** An optical disc according to claim 1, wherein the phosphite ester is triphenyl phosphite, tris-(nonylphenyl) phosphite, tris(2,4-di-t-butylphenyl) phosphite, 2-ethylhexyldiphenyl phosphite or didecyl-monophenyl phosphite.

**3.** An optical disc according to claim 1 or 2, wherein the bis(hydroxyphenyl)alkane is 2,2-bis(4-hydroxyphenyl)propane,

2,2-bis(4-hydroxyphenyl)butane,
2,2-bis(4-hydroxyphenyl)pentane,
2,2-bis(4-hydroxyphenyl)octane or
1,1-bis(4-hydroxyphenyl)ethane.

4. An optical disc according to claim 1,2 or 3, wherein the polycarbonate resin is of ordinary purity (conductivity of the polycarbonate water-extract is above 1.0 µS/cm).

**Patentansprüche**

1. Optische Platte, umfassend einen Träger für eine optische Platte aus einem Bis(hydroxyphenyl)alkan-Polycarbonat-Harz mit niedrigem mittleren Molekulargewicht und einen auf dem Träger gebildeten Aufzeichnungsfilm, wobei das Polycarbonat-Harz Phosphitester mit der folgenden allgemeinen Formel enthält:

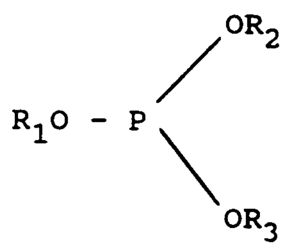

worin $R_1$ und $R_2$ Alkylgruppen oder Arylgruppen sind, und $R_3$ ein Wasserstoffatom, oder eine Alkyl- oder Arylgruppe ist, **dadurch gekennzeichnet,** daß der Phosphitester in einer Menge bis zu 0,0025 Gew.-% vorhanden ist und das mittlere Molekulargewicht des Harzes zwischen 13000 bis 22000 liegt.

2. Optische Platte nach Anspruch 1, worin der Phosphitester Triphenylphosphit, Tris(nonylphenyl)phosphit, Tris(2,4-di-tert.butylphenyl)phosphit, 2-Ethylhexyldiphenylphosphit oder Didecylmonophenylphosphit ist.

3. Optische Platte nach Anspruch 1 oder 2, worin das Bis(hydroxyphenyl)alkan
2,2 - Bis(4-hydroxyphenyl)propan,
2,2 - Bis(4-hydroxyphenyl)butan,
2,2 - Bis(4-hydroxyphenyl)pentan,
2,2 - Bis(4-hydroxyphenyl)oktan oder
1,1 - Bis(4-hydroxyphenyl)ethan ist.

4. Optische Platte nach Anspruch 1, 2 oder 3, worin das Polycarbonat-Harz von gewöhnlicher Reinheit ist (die Leitfähigkeit des Polycarbonat-Wasserextraktes ist größer als 1,0 µS/cm).

**Revendications**

1. Un disque optique qui comprend un substrat de disque optique en résine de polycarbonate de bis-(hydroxyphényl)alcane à bas poids moléculaire moyen, et un film d'enregistrement formé sur le substrat, la résine de polycarbonate contenant un ester phosphite ayant la formule :

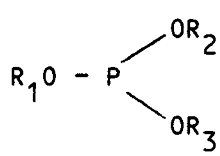

dans laquelle $R_1$ et $R_2$ sont des groupes alkyles ou des groupes aryles, et $R_3$ est un atome d'hydrogène, ou un groupe alkyle ou aryle, caractérisé en ce que l'ester phosphite est présent en quantité allant jusqu'à 0,0025% en poids et le poids moléculaire moyen de la résine est de 13 000 à 22

000.

**2.** Un disque optique selon la revendication 1, selon lequel l'ester phosphite est le phosphite de triphényle, le phosphite de tris(nonylphényle), le phosphite de tris(2,4-di-t-butylphényle), le phosphite de 2-éthylhexylediphényle ou le phosphite de didécylemonophényle.

**3.** Un disque optique selon la revendication 1 ou 2, selon lequel le bis(hydroxyphényl)alcane est le suivant :
2,2-bis(4-hydroxyphényl)propane,
2,2-bis(4-hydroxyphényl)butane,
2,2-bis(4-hydroxyphényl)pentane,
2,2-bis(4-hydroxyphényl)octane ou
1,1-bis(4-hydroxyphényl)éthane.

**4.** Un disque optique selon la revendication 1, 2 ou 3, selon lequel la résine de polycarbonate est de pureté ordinaire (conductivité de l'extrait à l'eau des polycarbonates supérieure à 1,0 $\mu$S/cm).